# EUROPÄISCHE PATENTSCHRIFT

(11) **EP 1 370 836 B1**
(45) Veröffentlichungstag und Bekanntmachung des Hinweises auf die Patenterteilung: **08.08.2012**
(21) Anmeldenummer: 01989594.5
(22) Anmeldetag: 13.12.2001
(51) Int. Cl.: G01F 23/284

(54) **VORRICHTUNG ZUR MESSUNG UND ÜBERWACHUNG EINER PROZESSGRÖSSE**
DEVICE FOR THE MEASUREMENT AND MONITORING OF A PROCESS PARAMETER
DISPOSITIF DE MESURE ET DE SURVEILLANCE D'UNE GRANDEUR DE PROCESSUS

(30) Priorität: 05.02.2001 DE 10105473
(43) Veröffentlichungstag der Anmeldung: 17.12.2003
(73) Patentinhaber: Endress + Hauser GmbH + Co. KG, 79689 Maulburg (DE)
(72) Erfinder: MICHALSKI, Bernhard, 79689 Maulburg (DE); STRÜTT, Bernd, 79585 Steinen (DE); HEIDEPRIEM, Sebastian, 79395 Neuenburg (DE)
(74) Vertreter: Andres, Angelika Maria
(86) Internationale Anmeldenummer: PCT/EP2001/014671
(87) Internationale Veröffentlichungsnummer: WO 2002/063252

(56) Entgegenhaltungen:
- US-A- 5 207 101
- US-A- 5 416 723
- US-A- 5 671 606
- US-A- 6 014 100

## Beschreibung

Die Erfindung bezieht sich auf eine Vorrichtung zur Messung und/oder Überwachung einer Prozeßgröße. Die Vorrichtung umfaßt die folgenden Komponenten: einen Sensor, eine intermittierend arbeitende Meßschaltung, die zumindest eine Energiespeichereinheit aufweist, wobei die Meßschaltung bzw. einzelne Komponenten der Meßschaltung jeweils für eine vorgegebene Zeitspanne, die sog. Aktivierungsphase, aktiviert werden, und eine Kontroll-stelle. Die Meßschaltung und die Kontrollstelle sind über eine Zweidrahtleitung miteinander verbunden. Gemäß einer bevorzugten Ausgestaltung der Vorrichtung, erfolgen sowohl die Energieversorgung der Vorrichtung als auch der Datenaustausch zwischen der Meßschaltung und der Kontrollstelle über die Zweidrahtleitung.

Aufgrund dieser Doppelfunktion der Zweidrahtleitung und der damit einhergehenden Kosteneinsparung werden Zweidraht-Meßgeräte in zunehmenden Maße in der industriellen Prozeßtechnik eingesetzt. Als ein wichtiger Industrie-Standard ist in diesem Zusammenhang der ISA-A 50.1-Standard zu nennen, bei dem Gleichstromwerte zwischen 4mA und 20mA den jeweiligen Meßwert charakterisieren und über die Zweidrahtleitung übertragen werden.

Nicht ganz unproblematisch ist bei Zweidraht-Meßgeräten, daß selbst im Falle eines sehr geringen Strompegels von z. B. 4 mA über die Zweidrahtleitung noch genügend Leistung zum Betreiben der Meßschaltung bzw. der einzelnen Komponenten der Meßschaltung zur Verfügung gestellt wird. Die Leistungsversorgung ist hierbei natürlich um so kritischer, je höher der Leistungsbedarf der Meßschaltung bzw. der Komponenten der Meßschaltung ist.

Prinzipiell bestehen zwei Möglichkeiten, um das Problem in den Griff zu bekommen. Entweder wird die Meßschaltung aus Komponenten mit einem entsprechend geringen Energieverbrauch zusammengesetzt- eine Lösung, die einen kontinuierlichen Betrieb der Meßschaltung möglich macht -, oder Komponenten mit einem vergleichsweise hohen Energieverbrauch werden intermittierend betrieben. Beim intermittierenden Betrieb wird nur während der sog. Aktivierungsphase Energie verbraucht wird, während die darauffolgende Erholungsphase dazu genutzt wird, einen Energiespeicher aufzuladen, der dann in der nachfolgenden Aktivierungsphase den aktivierten Komponenten der Meßschaltung wiederum die erforderliche Leistung zur Verfügung stellen kann. Als Beispiel für ein Zweidraht-Meßgerät der zuerst genannten Art wird auf die USA 5,672,975 verwiesen. Als Beispiel für eine Vorrichtung mit intermittierendem Betrieb sei die EP 0 687 375 B1 genannt.

In der Europäischen Patentschrift ist die Meßfrequenz des Meßwertgebers so ausgelegt, daß die entsprechende Leistungsaufnahme größer ist als die bei minimalem Strom und minimaler Spannung über die Zweidrahtleitung zur Verfügung gestellte Leistung. Da die verbrauchte Leistung während des Betriebs des Meßwertgebers die verfügbare Leistung übersteigt, zeigt sich in der Leistungsbilanz zwangsläufig ein Defizit. Sobald eine Fühlerschaltung ein Defizit erkennt, setzt die Meßschaltung die Ausführung des Meßprogramms aus, bis das Defizit nicht mehr besteht. Kurz gesagt, wird bei dieser bekannten Lösung ein Defizit in einem Energiespeicher diagnostiziert. Anhand dieses Defizits wird dann eine verlängerte Zykluszeit vorausberechnet - die Meßfrequenz wird also entsprechend geändert. Letztendlich bedeutet dies, daß immer abgeschätzt wird, wann der Energiespeicher vollständig oder bis zu einem gewissen Niveau aufgeladen ist. Nach Ablauf der geschätzten Zeit wird dann ein Meßsignal ausgesendet. Diese bekannt gewordene Lösung hat den Nachteil, daß sie überzogen lange Deaktivierungsphasen in Kauf nimmt. Hierdurch wird die Meßrate des Meßsystems - und damit die Meßgenauigkeit des Füllstandsmeßgeräts - herabgesetzt.

In der US-PS 6,014,100 sind sowohl die Zeitdauer für eine Aktivierungs- bzw. Meßphase als auch die Zeitdauer für eine Deaktivierungs- bzw. Ruhephase fest vorgegeben. Die Zeitdauer für die Deaktivierungsphase (bzw. die Taktrate der Meßschaltung) ist so festgelegt, daß selbst im ungünstigsten Fall (bei einem 4-20mA Meßgerät stehen in diesem Fall nur 4 mA über die Zweidrahtleitung zur Verfügung) genügend Energie für die nachfolgende Meßphase bereitgestellt werden kann.

Desweiteren ist in der US-PS 5,207,101 ist ein Verfahren beschrieben, wie ein in Richtung Füllgut abgestrahltes Ultraschall-Meßsignalimpuls möglichst sicher und exakt detektiert wird. Anhand der Laufzeitdifferenz des ausgesendeten und empfangenen Meßsignals wird nachfolgend die Laufstrecke und daraus bei bekannter Behälterhöhe die Füllhöhe des Füllguts in dem Behälter bestimmt. Insbesondere wird ein Zweidraht-Ultraschall-Füllstandsmeßgerät mit einer Schaltung zur Detektion einen Analogsignals beschrieben: Hierbei wird angenommen, daß ein detektiertes Signal, welches einen gewissen Schwellenwert übersteigt, ein an der Oberfläche des Füllguts reflektiertes Meßsignal repräsentiert.

Der Erfindung liegt die Aufgabe zugrunde, eine Vorrichtung zur Optimierung der Leistungssteuerung bei einem Füllstandsmeßgerät vorzuschlagen.

Die Aufgabe wird dadurch gelöst, daß eine Regel-/Auswerteeinheit vorgesehen ist, die die Meßschaltung frühestens aktiviert, wenn die Energie in dem Energiespeicher einen vorgegebenen Level erreicht. Hierbei kann der Level beispielsweise so bemessen sein, daß er zumindest den Energiebedarf der Meßschaltung während der Aktivierungsphase deckt. Bevorzugt ist der Level jedoch durch den Zustand definiert, wenn die Energiespeichereinheit vollständig oder nahezu vollständig aufgeladen ist.

Gegenüber dem Stand der Technik weist die erfindungsgemäße Lösung drei entscheidende Vorteile auf:
- Die erfindungsgemäße Vorrichtung zeichnet sich durch eine erhöhte Sicherheit aus: Während die Meßschaltung, die aus dem Stand der Technik bekannt geworden ist, erst reagiert, wenn eine kritische Spannung unterschritten ist, ist im Falle der erfindungsgemäßen Lösung der Energiespeicher immer möglichst vollständig aufgeladen. Dies ist-ganz allgemein gesprochen- vor allem dann wichtig, wenn zwischen dem Energiespeicher und dem Energieverbraucher DC/DC-Wandler eingesetzt werden: Um die nötige Energie aus dem Energiespeicher zu beziehen, wird der DC/DC-Wandler gemäß I=U/R den Strom umgekehrt proportional zur Speicherspannung aus dem Energiespeicher ziehen. Dies bedeutet im Falle der bekannt gewordenen Lösung, daß bei kritisch niedrigen Speicherspannungen der Konstantstromverbrauch aus dem Energiespeicher ansteigt, was ein Erholen des Systems mit abnehmender Spannung immer unwahrscheinlicher macht.
- Die erfindungsgemäße Vorrichtung weist kürzere Zyklusraten als der Stand der Technik auf: Da im Falle einer ungenügenden Energiezufuhr die Energie auf einem Niveau nahe des Maximums gehalten wird und nicht auf einem niedrigen kritischen Niveau, reduziert sich auch maßgeblich die Spannung über den Stromregler, welcher den Strom einstellt. Diese Restspannung führt übrigens zwangsläufig zu einem Wandeln von elektrischer Energie in Wärme gemäß der Formel P=U • I. Wird der Energiespeicher immer vollständig oder fast vollständig aufgeladen, so reduziert sich diese Spannung und damit die in Wärme umgewandelte Energie. Der hierdurch gewonnene Energieanteil steht den Komponenten der Meßschaltung daher zusätzlich zur Verfügung.
- Die erfindungsgemäße Vorrichtung ist parameterunabhängig: Da nicht die Zykluszeit berechnet wird, sondern stets der Ladezustand des Energie-speichers betrachtet wird, ist die erfindungsgemäße Vorrichtung unabhängig von dem Konstantstromverbrauch, dem Impulsstromverbrauch und der Energiezufuhr. Es muß lediglich gewährleistet sein, daß der Energiespeicher ohne Impuls geladen wird, was bedeutet, daß der Strom des Verbrauchers kleiner sein muß als die Sromzufuhr, und die Energie-entnahme während der Aktivierungsphase darf den Energiespeicher nicht zu weit entleeren. Dies ist jedoch letztendlich eine Frage der Dimensionierung der Meßschaltung.

Gemäß einer bevorzugten Weiterbildung der erfindungsgemäßen Vorrichtung ist vorgesehen, daß es sich bei der Prozeßgröße um den Füllstand eines Füllguts in einem Behälter handelt. Insbesondere handelt es sich bei dem Sensor um einen Füllstandssensor, der Meßsignale in Richtung der Oberfläche des Füllguts aussendet und der die an der Oberfläche des Füllguts reflektierten Echosignale empfängt. Bei den Meßsignalen handelt es sich um elektromagnetische Signale, z. B. Mikrowellensignale, oder um Ultraschall-signale. Im Falle von Mikrowellensignalen breiten sich diese entweder im Freifeld aus, oder sie werden über ein leitfähiges Element in den Behälter hineingeführt. Entsprechende Meßgeräte werden von der Anmelderin unter den Bezeichnungen 'Micropilot' bzw. 'Levelflex' bzw. 'Prosonic' angeboten und vertrieben.

Der eigentliche Füllstandsmeßwert wird bei den sog. Laufzeitverfahren anhand des Nutzechosignals der digitalen Hüllkurve bzw. der Echokurve ermittelt. Hierbei repräsentiert die Echokurve die Amplitudenwerte der Echosignale als Funktion der Laufzeit der Meßsignale auf dem Weg zwischen der Antenne und der Oberfläche des Füllguts. Anhand der Echokurve wird das Nutzechosignal bestimmt, welches den Signalanteil darstellt, der an der Oberfläche des Füllguts reflektiert wird.

Vorrichtungen, die den Füllstand eines Füllguts in einem Behälter über die Laufzeit von Meßsignalen bestimmen, nutzen die physikalische Gesetzmäßig-keit aus, wonach die Laufstrecke gleich dem Produkt aus Laufzeit und Ausbreitungsgeschwindigkeit ist. Im Falle der Füllstandsmessung entspricht die Laufstrecke dem doppelten Abstand zwischen Antenne und Oberfläche des Füllguts. Der Füllstand selbst ergibt sich dann aus der Differenz zwischen dem bekannten Abstand der Antenne von dem Boden des Behälters und dem durch die Messung bestimmten Abstand der Oberfläche des Füllguts von der Antenne.

Werden hochfrequente Mikrowellensignale als Meßsignale eingesetzt, so werden die Echosignale vor der Auswertung üblicherweise über ein sequen-tielles Abtastverfahren in den Niederfrequenzbereich transformiert. Das durch die Transformation kreierte Zwischenfrequenzsignal wird anschließend ausgewertet. Das Zwischenfrequenzsignal zeichnet sich dadurch aus, daß es den gleichen Verlauf wie die Hüllkurve hat; allerdings ist es gegenüber dieser um einen definierten Zeitdehnungsfaktor gestreckt. Der Vorteil der Trans-formation auf die Zwischenfrequenz ist vornehmlich darin zu sehen, daß relativ langsame und damit kostengünstige elektronische Bauteile zur Signalerfassung und/oder Signalauswertung verwendet werden können. Eine Ausführungsform eines Verfahrens zur sequentiellen Abtastung von Echo-signalen ist übrigens in der DE 31 07 444 A1 beschrieben.

Gemäß einer bevorzugten Ausgestaltung der erfindungsgemäßen Vorrichtung handelt es sich bei der Energiespeichereinheit um einen Kondensator. Eine günstige Weiterbildung sieht darüber hinaus vor, daß zu dem Kondensator eine Speicherbegrenzungseinheit parallel geschaltet ist. Bei der Speicherbegrenzungseinheit handelt es sich beispielsweise um eine Z-Diode.

Um stets sicherstellen zu können, daß der Leistungsbedarf des Füllstandsmeßgeräts gedeckt ist, sieht eine vorteilhafte Ausgestaltung der erfindungsgemäßen Vorrichtung vor, daß die Regel-/Auswerteschaltung die Aktivierungsphase einleitet, sobald in der Meßschaltung bzw. an einer Komponente der Meßschaltung ein vorgegebener Stromwert und/oder Spannungswert erreicht wird.

Insbesondere hat es sich als vorteilhaft herausgestellt, wenn die Regel-/Auswerteeinheit die Aktivierungsphase erst zu einem Zeitpunkt einleitet, wenn der vorgegebene Stromwert und/oder Spannungswert während eines vorbestimmten Zeitintervalls konstant sind/ist. Insbesondere gibt die Regel-/Auswerteeinheit eine zusätzliche Mindestwartezeit vor, bevor sie die Aktivierungsphase einleitet.

Die Erfindung wird anhand der nachfolgenden Zeichnungen näher erläutert. Es zeigt:
Fig. 1: ein Blockschaltbild einer Ausführungsform der erfindungsgemäßen Vorrichtung,
Fig. 2: ein Blockschaltbild der erfindungsgemäßen Vorrichtung,
Fig. 3: ein Flußdigagramm zur Einleitung der Aktivierungsphase,
Fig. 4: ein Blockschaltbild einer bevorzugten Ausgestaltung der getakteten Meßschaltung,
Fig. 5: eine schematische Darstellung des Spannungstransienten, der bevorzugt zur Ermittlung der Taktrate der Meßschaltung herangezogen wird, und
Fig. 6: eine Darstellung unterschiedlicher Spannungsverläufe an einer Speichereinheit, die erfindungsgemäß genutzt wird.

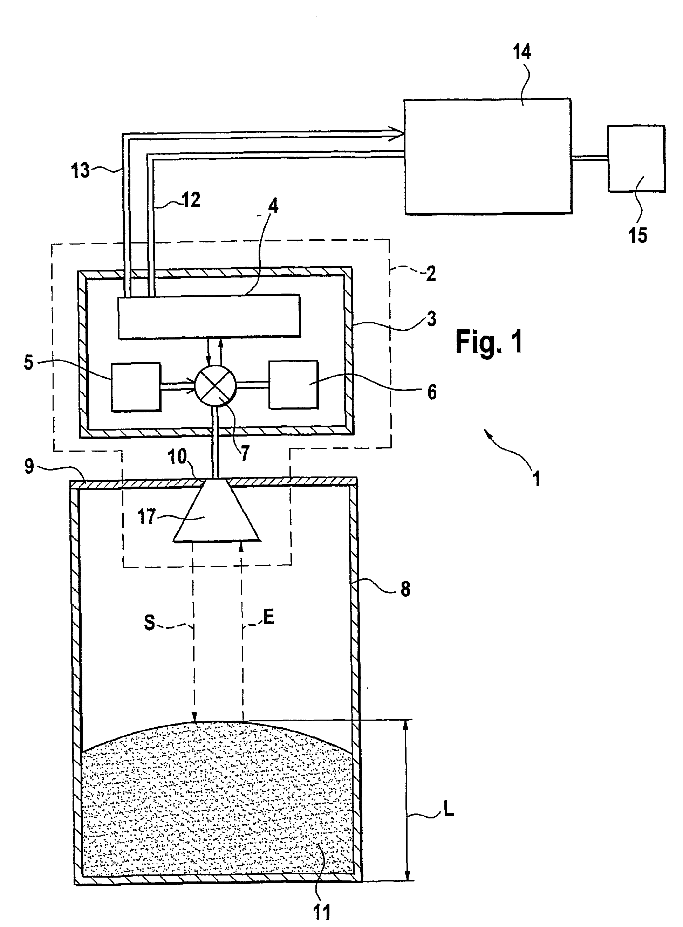

Fig. 1 zeigt ein Blockschaltbild einer Ausführungsform der erfindungsgemäßen Vorrichtung 1. Ein Füllgut 11 ist in dem Behälter 8 gelagert. Zur Bestimmung des Füllstandes L dient das Füllstandsmeßgerät 1, das in einer Öffnung 10 im Deckel 9 des Behälters 8 montiert ist. Über die Antenne 17 werden in der Signalerzeugungs-/Sendeeinheit 5 erzeugte Sendesignale, insbesondere Mikrowellenpulse, in Richtung der Oberfläche des Füllguts 11 abgestrahlt. An der Oberfläche des Füllguts 11 werden die Meßsignale als sog. Nutzecho-signale reflektiert. Diese Echosignale werden in der Empfangseinheit 6 empfangen und gegebenenfalls auf die Zwischenfrequenz transformiert. Insbesondere wird - wie bereits an vorhergehender Stelle beschrieben - die zeitgedehnte digitale Hüllkurve gebildet, die die Amplitudenwerte der Echo-signale als Funktion der Laufzeit zwischen Antenne 17 und Oberfläche des Füllguts 11 beschreibt. Die korrekte Taktung von Absendung der Sende-signale und Empfang der Echosignale durch die Sendeeinheit 5 bzw. die Empfangseinheit 6 erfolgt über die Sende-Empfangsweiche 7. Es versteht sich von selbst, daß anstelle der einen Antenne 17 auch eine separate Sendeantenne und eine separate Empfangsantenne zum Einsatz kommen können. Erfindungsgemäß wird die Taktrate der Meßschaltung 3 von der Regel-/Auswerteschaltung 4 so gesteuert, daß sichergestellt ist, daß der Leistungsbedarf der erfindungsgemäßen Vorrichtung 1 während der Aktivierungsphase über die Zweidrahtleitung 12, 13 vollständig gedeckt ist und andererseits die 'Schußrate' möglichst groß ist.

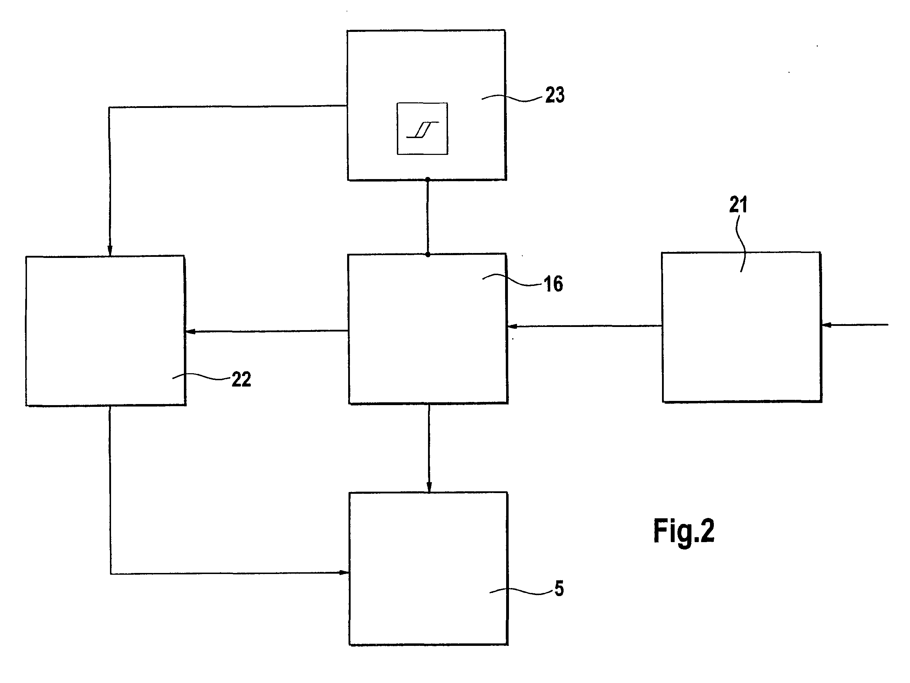

In Fig. 2 ist ein Blockschaltbild der wesentlichen Komponenten der erfindungsgemäßen Vorrichtung 1 zu sehen. Über die Energieversorgungseinheit 21 wird die Energiespeichereinheit 16 mit Energie versorgt. Bevorzugt wird die Energiespeichereinheit 16 mit einem Konstantstrom aufgeladen. Erkennt die Speicherüberwachungseinheit 23, daß der vorgegebene Level 'PowerGood' in der Energiespeichereinheit 16 erreicht ist, so erhält der Mikroprozessor 22 die Information, daß er die nächste Aktivierungsphase auslösen kann. Der Level 'PowerGood' bedeutet bevorzugt, daß die Energiespeichereinheit 16 näherungsweise vollständig aufgeladen ist. Nachfolgend triggert der Mikroprozessor 22 die Sendeeinheit 5, und die Sendeeinheit 5 sendet ein Meßsignal aus. Über die Energiespeichereinheit 16 wird übrigens auch der Mikroprozessor 22 mit Energie versorgt.

Die Einleitung einer Aktivierungsphase bzw. die Aussendung eines Meßsignals wird bevorzugt gemäß einem Programm gesteuert, das in dem Mikroprozessor 22 abgespeichert ist. Vorgegebenen werden PowerGood und MinCycleTime. Wie bereits erwähnt, kennzeichnet PowerGood bevorzugt den Level, der durch die näherungsweise maximal aufgeladene Energiespeicher-einheit 16 definiert ist. MinCycleTime kennzeichnet eine maximale Schußrate. Diese maximale Schußrate wird nicht überschritten - selbst dann nicht, wenn die zur Verfügung stehende Energie eigentlich für ein früheres Einleiten der Aktivierungsphase genügen würde.

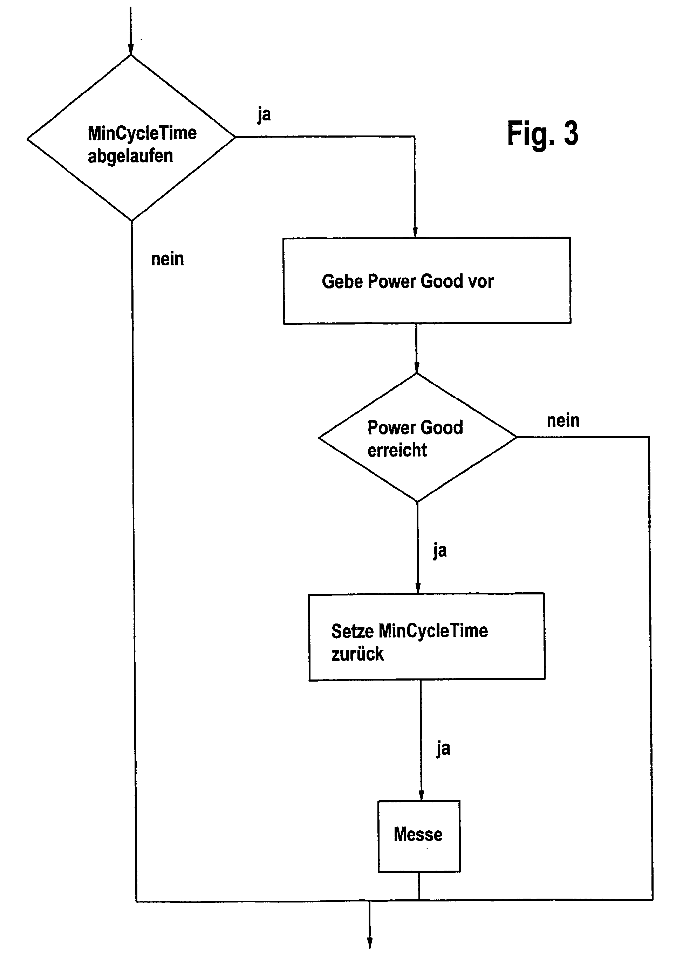

Gemäß dem in Fig. 3 dargestellten Flußdiagramm wird bei Erreichen des Levels 'PowerGood' mit der Aussendung des Meßsignals bzw. mit der Einleitung der nächsten Aktivierungsphase gewartet, bis MinCycleTime abgelaufen ist.

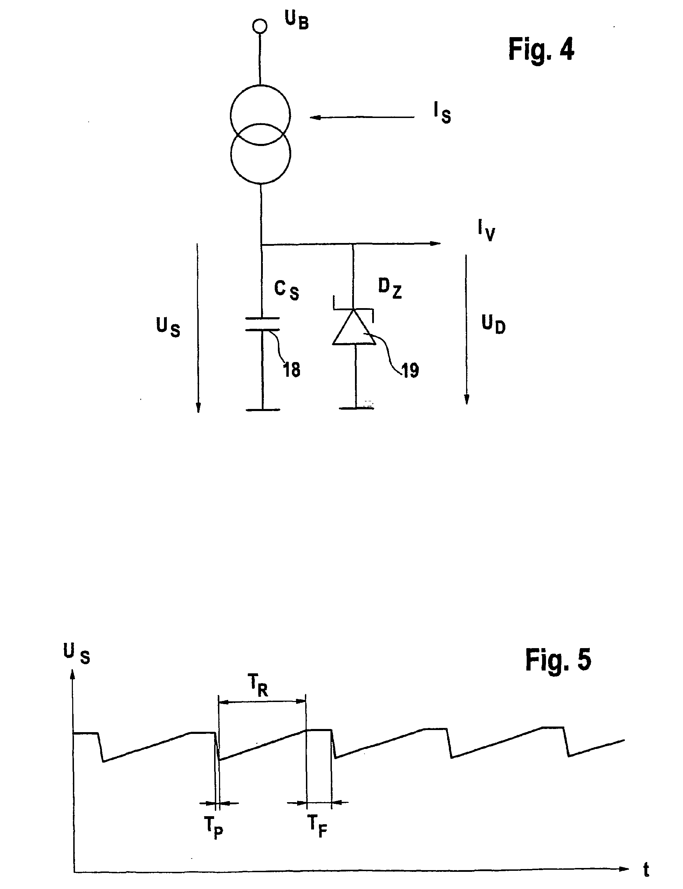

In Fig. 4 ist ein Blockschaltbild einer bevorzugten Energieversorgung der Meßschaltung mit Strommodulation dargestellt. Bei der Energiespeicher-einheit 16 handelt es sich im gezeigten Fall um einen Kondensator 18 mit der Kapazität *Cₛ .* Der Kondensator 18 wird mit einem Konstantstrom *Iₛ* solange aufgeladen, bis die Spannung *U_{S}* die maximale Spannung der Zener-Diode 20 - oder allgemein: der Speicherbegrenzungseinheit 19 - erreicht hat. Die Diode 20 ist so gewählt, daß die während der Aktivierungsphase zur Verfügung stehende Energie optimal auf die zu betreibenden Komponenten der Meßschaltung 3 abgestimmt ist. Sobald die Spannung *U_{S}* die an der Diode 20 maximal mögliche Spannung *D_{z}* erreicht hat, fließt der Strom *Iₛ* nicht mehr in den Kondensator 18, sondern wird von der Z-Diode 20 in Wärme umgewandelt. Sobald dieser Zustand und nur wenn dieser Zustand vollständig erreicht oder theoretisch fast erreicht ist, wird die Aktivierungsphase von der Regel-/Auswerteeinheit 4 eingeleitet.

Fig. 5 zeigt eine schematische Darstellung des Spannungstransienten, der bevorzugt zur Ermittlung der Taktrate der Meßschaltung 3 herangezogen wird. Insbesondere ist in Fig. 5 der typische Verlauf der Spannung *U_{S}* (sh. auch Fig. 4) gegen die Zeit t aufgetragen. Der Spannungsverlauf wird beispiels-weise mit einem Mikroprozessor, der z. B. Teil der Regel-/Auswerteeinheit 4 ist, verfolgt. Während der Aktivierungsphase, also während der Puls-Zeit *T_{P}* wird ein Meßsignal in Richtung auf das Füllgut 11 ausgesendet; der Kondensator 18 wird teilweise entladen. Während der Erholungszeit *T_{R}* wird der Kondensator 18 wieder aufgeladen. Während der Mindestwartezeit *T_{F}* wird der Kondensator 18 nicht weiter aufgeladen. In dieser Zeit verläuft der Transient der Spannung parallel zur Zeitachse. Eine Beobachtung der Spannung *U_{S}* zur Enennung des waagerechten Transienten während der Zeit *T_{F}* kann gemäß einer vorteilhaften Ausgestaltung der erfindungs-gemäßen Vorrichtung 1 als Kriterium dafür herangezogen werden, wann die die Meßschaltung 3 die nächste Aktivierungsphase einleitet.

Gemäß einer alternativen Ausgestaltung der erfindungsgemäßen Vorrichtung 1 kann anstelle des Spannungstransienten die Spannung bzw. der Strom an der Speicherbegrenzungseinheit 19 als Indikator für die Einleitung der nächsten Aktivierungsphase herangezogen werden. Beobachtet man z.B. den Strom oder die Spannung an der Diode 20, so kann eine Entscheidung darüber getroffen werden, ob die Energiespeichereinheit 16 vollständig aufgeladen ist. Alternativ kann die Spannung über dem Stromregler hinzugezogen werden: Ist die Versorgungsspannung *U_{B}* kleiner als die durch die Speicherbe-grenzungseinheit 19 resultierende Spannung *U_{S}* (z. B. die Spannung an der Diode 20), so wird das o. g. Kriterium nie erreicht. In diesem Fall wird die Spannung über der Stromsenke im voll aufgeladenen Zustand eine bestimmte Schwelle unterschreiten. Bezugnehmend auf das in Fig. 2 gezeigte Beispiel bedeutet dies, daß *U_{B} - U_{S}* = 0V ist. Daher ist es möglich, die Spannung über der Stromsenke als weiteres Kriterium für die nächste Aktivierungsphase heranzuziehen. Eine optimierte Lösung kann durch eine Kombination der beiden zuletzt genannten Kriterien erzielt werden.

Eine weitere Alternative zur Bestimmung der Einleitung der Aktivierungsphase sieht die Berechnung der maximalen Spannung vor. Berechnet man die nach Spezifikation der Klemmenspannung niedrigste Spannung *U_{S}* = *U_{TH}* während der Mindestwartezeit *T_{F}*, so kann diese als Grenzspannung für die Einleitung der nächsten Aktivierungsphase verwendet werden. Hier entscheidet insbesondere ein einfacher Komparator über die Zulässigkeit einer neuen Aktivierungsphase. Gemäß einer bevorzugten Variante der erfindungs-gemäßen Vorrichtung 1 ist darüber hinaus vorgesehen, daß die Schwellen-spannung *U_{TH}* eine Funktion des Stromes I sein kann. Hierdurch läßt sich die 'Schußrate' bzw. die Meßfrequenz des Füllstandsmeßgeräts 1 weiterhin optimieren. In diesem Fall wird die Energiespeichereinheit 16 nicht mehr vollständig aufgeladen, da der theoretische Wert zur Erfüllung der Worst-Case-Bedingung kleiner als die tatsächliche Spannung *U_{S}* während der Mindest-Wartezeit *T_{F}* sein muß.

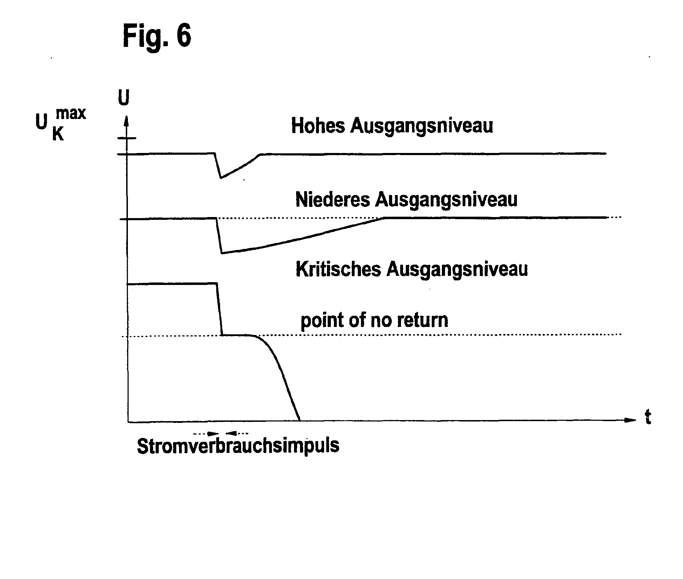

Fig. 6 zeigt eine Darstellung unterschiedlicher Spannungsverläufe an einem Energiespeicher, der erfindungsgemäß zur Optimierung der Schußrate bei einem Füllstandsmeßgerät genutzt wird. Als Energiespeicher wird beispiels-weise ein Elektrolytkondensator 18 verwendet, wobei ein Hauptgedanke der Erfindung darin besteht, diesen Kondensator 18 immer auf einem Spannungs-niveau zu halten, das möglichst nahe an der maximal zur Verfügung stehenden Klemmenspannung liegt.
Der Spannungsverlauf nach einem Stromverbrauchsimpuls - also bei Aussendung eines Meßpulses - wird in der Fig. 6 bei drei verschiedenen Ausgangsniveaus gezeigt. Hierbei ist der Spanungsverlauf des Kondensators 18 ein Maß für das Energieniveau des Energiespeichers.

Bevorzugt wird der Kondensator 18 jeweils möglichst bis zur maximalen Klemmenspannung U aufgeladen. Der Vorteil dieser erfindungsgemäßen Lösung ist einerseits darin zu sehen, daß die Verlustleistung, welche über dem Stromregeler thermisch verbraucht wird, verringert wird; andererseits wird das Energieniveau des Energiespeichers auf ein höheres Niveau geregelt. Dies ist vor allem beim Einsatz eines DC-DC-Wandlers zur Leistungsoptimierung wichtig, da der Strom, welcher dem Energiespeicher entzogen wird, umgekehrt proportional zu der Spannung ist. Somit ist auch die Erholzeit umgekehrt proportional zu der jeweiligen Ausgangsspannung - je höher das Ausgangsniveau ist, um so geringer ist die Erholzeit und um so schneller kann der nachfolgende Sendeimpuls ausgesendet werden.

Außerdem liegt ein Spannungsniveau, welches näherungsweise der maximalen Klemmenspannung entspricht, weit entfernt von dem kritischen Punkt. Als kritischer Spannung wird das Spannungsniveau angesehen, bei dem der Spannungsabfall in Folge der Aussendung eines Meßsignals so groß ist, daß der 'point of no return" erreicht wird. Bei Erreichen dieses Spannungswertes fällt die Spannung am Kondensator 18 auf Null ab.

## Patentansprüche

1. Vorrichtung zur Messung und/oder Überwachung einer Prozeßgröße, mit einem Sensor (2), einer mit einer Taktrate intermittierend arbeitenden Meßschaltung (3), die zumindest eine Energiespeichereinheit (16) aufweist, wobei die Meßschaltung (3) bzw, einzelne Komponenten der Meßschaltung (3) jeweils für eine vorgegebene Zeitspanne, die sog. Aktivierungsphase, aktiviert werden, und mit einer Kontrollstelle (14),
wobei die Meßschaltung (3) und die Kontrollstelle (14) über eine Zweidrahtleitung (12, 13) miteinander verbunden sind und
wobei eine Regel-/Auswerteeinheit (4) vorgesehen ist, die die Meßschaltung (39 frühestens aktiviert, wenn die Energie in der Einergiespeichereinheit (16) einen vorgegebenen Level erreicht, und wobei die die Regel-/Auswerteeinheit (4) die Taktrate der Meßschaltung (3) so steuert, daß sichergestellt ist, daß einerseits der Leistungsbedarf der Meß- und/oder Überwachungsvorrichtung (1) während der Aktivierungsphase über die Zweidrahtleitung (12, 13) vollständig gedeckt ist und daß andererseits die Anzahl der Aktivierungsphasen je Zeiteinheit möglichst groß ist.

2. Vorrichtung nach Anspruch 1,
wobei es sich bei der Prozeßgröße um den Füllstand (L) eines Füllguts (11) in einem Behälter (8) handelt.

3. Vorrichtung nach Anspruch 1 oder 2,
wobei es sich bei dem Sensor (2) um einen Füllstandssensor handelt, der Meßsignale in Richtung der Oberfläche des Füllguts (11) aussendet und der die an der Oberfläche des Füllguts (11) reflektierten Echosignale empfängt.

4. Vorrichtung nach Anspruch 1, 2 oder 3,
wobei es sich bei der Energiespeichereinheit (16) um einen Kondensator (18) handelt.

5. Vorrichtung nach Anspruch 4,
wobei zu dem Kondensator (18) eine Speicherbegrenzungseinheit (19) parallel geschaltet ist.

6. Vorrichtung nach Anspruch 1, 2, 3, 4 oder 5,
wobei die Regel-/Auswerteschaftung (4) die Aktivierungsphase einleitet, sobald in der Meßschaltung (3) bzw. an einer Komponente der Meßschaltung (3) ein vorgegebener Stromwert und/oder Spannungswert erreicht wird.

7. Vorrichtung nach einem oder mehreren der vorhergehenden Ansprüche,
wobei die Regel-/Auswerteeinheit (4) die Aktivierungsphase erst einleitet, wenn der vorgegebene Stromwert und/oder Spannungswert während eines vorbestimmten Zeitintervalls konstant sind/ist.

8. Vorrichtung nach einem oder mehreren der vorhergehenden Ansprüche,
wobei die Regel-/Auswerteeinheit (4) eine zusätzliche Mindestwartezeit (MinCycleTime) vorgibt, bevor sie die Aktivierungsphase einleitet.

9. Vorrichtung nach Anspruch 1,
wobei sowohl die Energieversorgung der Vorrichtung (1) als auch der Datenaustausch zwischen der Meßschaltung (3) und der Kontrollstelle (14) über die Zweidrahtleitung (12, 13) erfolgt.

## Claims

1. Unit for measuring and/or monitoring a process variable with a sensor (2), a measuring circuit (3) that works intermittently with a clock rate, said measuring circuit having at least one energy storage unit (16), wherein the measuring circuit (3) or individual components of the measuring circuit (3) is/are activated for a predefined period, known as the activation phase, and with a control point (14),
wherein the measuring circuit (3) and the control point (14) are connected by a two-wire cable (12, 13) and
wherein a regulation/evaluation unit (4) is provided which activates the measuring circuit (3) at the very earliest when the energy in the energy storage unit (16) has reached a predefined level and wherein the regulation/evaluation unit (4) controls the clock rate of the measuring circuit (3) in such a way that guarantees that the power requirement of the measurement and/or monitoring unit (1) is totally covered during the activation phase via the two-wire cable (12, 13) and that the number of activation phases per time unit is as large as possible.

2. Unit as claimed in Claim 1,
wherein the process variable is the level (L) of a product (11) in a container (8).

3. Unit as claimed in Claim 1 or 2,
wherein the sensor (2) is a level sensor which transmits measurement signals in the direction of the surface of the product (11) and which receives echo signals reflected at the surface of the product (11).

4. Unit as claimed in Claim 1, 2 or 3,
wherein the energy storage unit (16) is a capacitor (18).

5. Unit as claimed in Claim 4,
wherein a storage limiter (19) is connected in parallel to the capacitor (18).

6. Unit as claimed in Claim 1, 2, 3, 4 or 5,
wherein the regulation/evaluation circuit (4) initiates the activation phase as soon as a predefined current value and/or voltage value is reached in the measuring circuit (3) or at a component of the measuring circuit (3).

7. Unit as claimed in one or more of the previous claims,
wherein the regulation/evaluation circuit (4) only initiates the activation phase if the predefined current value and/or voltage value are/is constant during a predetermined interval.

8. Unit as claimed in one or more of the previous claims,
wherein the regulation/evaluation unit (4) specifies an additional minimum waiting time (MinCycleTime) before it initiates the activation phase.

9. Unit as claimed in Claim 1,
wherein energy is supplied to the unit (1) and data are exchanged between the measuring circuit (3) and the control point (14) via the two-wire cable (12, 13).

## Revendications

1. Dispositif destiné à la mesure et/ou la surveillance d'une grandeur process, avec un capteur (2), un circuit de mesure (3) fonctionnant par intermittence à une cadence déterminée, lequel dispositif comprend au moins une unité d'accumulation d'énergie (16), le circuit de mesure (3) ou les différents composants du circuit de mesure (3) étant activés pendant un laps de temps prédéfini, appelé phase d'activation, et avec un poste de contrôle (14),
le circuit de mesure (3) et le poste de contrôle (14) étant reliés entre eux par le biais d'un câble bifilaire (12, 13) et
une unité de régulation / d'exploitation (4) étant prévue, laquelle active le circuit de mesure (3) au plus tôt lorsque l'énergie dans l'unité d'accumulation d'énergie (16) a atteint un niveau prédéfini, et l'unité de régulation / d'exploitation (4) pilotant la cadence du circuit de mesure (3) de telle manière à garantir que, d'une part, le besoin en puissance du dispositif de mesure et/ou de contrôle (1) soit totalement couvert pendant la phase d'activation par l'intermédiaire du câble bifilaire (12, 13) et, d'autre part, que le nombre de phases d'activation par unité de temps soit aussi grand que possible.

2. Dispositif selon la revendication 1,
pour lequel il s'agit, concernant la grandeur process, du niveau de remplissage (L) d'un produit (11) dans un réservoir (8).

3. Dispositif selon la revendication 1 ou 2,
pour lequel il s'agit, concernant le capteur (2), d'un capteur de niveau, qui émet des signaux de mesure en direction de la surface du produit (11) et qui reçoit les signaux d'écho réfléchis à la surface du produit (11).

4. Dispositif selon la revendication 1, 2 ou 3,
pour lequel il s'agit, concernant l'unité d'accumulation d'énergie (16), d'un condensateur (18).

5. Dispositif selon la revendication 4,
pour lequel une unité de limitation d'accumulation (19) est couplée parallèlement au condensateur (18).

6. Dispositif selon la revendication 1, 2, 3, 4 ou 5,
pour lequel l'unité de régulation / d'exploitation (4) déclenche la phase d'activation sitôt qu'une valeur de courant et/ou valeur de tension prédéfinie est atteinte dans le circuit de mesure (3) ou sur un composant du circuit de mesure (3).

7. Dispositif selon l'une des revendications précédentes,
pour lequel l'unité de régulation / d'exploitation (4) ne déclenche la phase d'activation que lorsque la valeur de courant et/ou la valeur de tension prédéfinie est/sont constante(s) pendant un intervalle de temps prédéterminé.

8. Dispositif selon l'une des revendications précédentes,
pour lequel l'unité de régulation / d'exploitation (4) spécifie un temps d'attente minimum (MinCycleTime) supplémentaire, avant qu'elle ne déclenche la phase d'activation.

9. Dispositif selon la revendication 1,
pour lequel à la fois l'alimentation en énergie du dispositif (1) et l'échange de données entre le circuit de mesure (3) et le poste de contrôle (14) sont réalisés par l'intermédiaire du câble bifilaire (12, 13).
